# EUROPEAN PATENT APPLICATION

(11) **EP 4 700 303 A1**
(43) Date of publication of application: **25.02.2026**
(21) Application number: 25196974.7
(22) Date of filing: 20.08.2025
(51) Int. Cl.: F24S 25/61, F24S 25/00, F24S 25/60, E04D 13/00, H02S 20/24, E04G 21/32

(54) **A FIXING DEVICE FOR FIXING ROOFTOP DEVICES AND A FIXING ARRANGEMENT FOR FIXING ROOFTOP DEVICES AND A METHOD FOR FIXING ROOFTOP DEVICES**

(30) Priority: 22.08.2024 FI 20246049
(71) Applicant: Peltitarvike Oy, 00940 Helsinki (FI)
(72) Inventor: Bärlund, Kristian, 00940 Helsinki (FI); Mäenpää, Lasse, 00940 Helsinki (FI); Lepola, Henna, 00940 Helsinki (FI)
(74) Representative: LEITZINGER OY

(57) **Abstract**

The invention relates to a fixing device (1) for fixing solar panels (2) and a lifeline (3) on top of a roof (4) of a building (5), wherein the fixing device (1) comprises a fixing base (6) for being fixed to the roof (4); and an elongated pole (7) protruding from the fixing base (6), a first end (7a) thereof being connected to the fixing base (6); and a first mounting means (8) for a lifeline (3) at the second end (7b) of the elongated pole (7); and a second mounting means (9) for a support structure (10) of solar panels (1), said second mounting means (9) being provided on the fixing base (6). The invention also relates to a fixing arrangement (A) and a method implementing the fixing device (1).

## Description

### Field of the invention

The invention relates to fixing of solar panels and a lifeline on top of a roof of a building.

### Background of the invention

In solar panel systems, it is common to install solar panels on top of a roof of a building. Thus, rooftop area can be utilized and the solar panel system does not consume space for instance from beside the building. Moreover, rooftop usually offers a spacious, open and effectively sunlit/unshaded place for the panel system due to its high position.

The roof of large buildings, such as for example office buildings, apartment buildings or industrial buildings, are often horizontal or slightly inclined. The roof of such a building is often constructed such that it comprises waterproof cover layer forming the outermost surface of the roof. The waterproof cover layer may be formed of one or more rollable sheets such as of one or more bituminous felt sheets, or of one or more PVC sheets or of one or more roof plates (tin roof; "kattopelti"), for example.

The solar panel systems are commonly built such that several solar panels thereof are mounted on a support structure such as a rail for instance, which is mounted directly on the surface structure of the roof structure e.g. by screws or bolts screwed into the waterproof cover and the material below it such as to the aforementioned relatively hard heat insulation layer. There may be also wood structures right below the waterproof cover to which screws can be fixed. The solar panel systems have been mounted to multiple positions at the roof top to facilitate its firmness so that blasts of wind would not detach it.

It may be a requirement that a rooftop is provided with safety devices facilitating safe working on the rooftop. This kind of structures are advantageous also when servicing the solar panel systems. This kind of safety device is in particular a lifeline to which the worker can connect a rope, a cable or a strap of a safety harness. The rope, a cable or a strap can thus prevent the worker wearing the harness from falling from the rooftop. The lifeline can be in the form of an elongated cable tensioned between two poles fixed to the roof structures. A runner such as a loop or ring or an sort of guide device can be mounted on the lifeline such that it can run along it. Thus, the worker can move on the rooftop relatively freely. The poles should be sturdy and fixed firmly to the roof structure so that they are able to endure the forces in the event that the worker falls.

One drawback of previous solutions has been that they have required finding multiple fixing points to various objects to be installed on the rooftop, which inter alia consumes time and makes the overall system complex. One drawback of previous solutions has been that they have required using different fixing devices, which inter alia consumes time and makes the overall system complex. One drawback of previous solutions has been that the waterproof cover layer has been pierced at great number of locations by fixing means of the objects to be installed on the rooftop.

### Brief description of the invention

The object of the invention is to introduce an improved fixing arrangement as well as an improved fixing device as well as an improved method for fixing.

An object is to introduce a new solution by which one or more of the above-mentioned problems of prior art and/or drawbacks discussed or implied elsewhere in the description can be alleviated.

An object is to achieve a solution whereby plurality of objects can be installed firmly on the rooftop with a single fixing device and with a single connection to the roof. A small amount of piercings or openings are required in the waterproof cover layer of the roof.

It is brought forward a new fixing device for fixing solar panels and a lifeline on top of a roof of a building, wherein the fixing device comprises a fixing base for being fixed to the roof; and an elongated member, which elongated member is preferably an elongated pole, the elongated member protruding from the fixing base, a first end thereof being connected to the fixing base; and a first mounting means for a lifeline at the second end of the elongated member; and a second mounting means for a support structure of solar panels, said second mounting means being provided on the fixing base.

With this kind of solution one or more of the above-mentioned objects can be facilitated.

Preferable further details of the fixing device are introduced in the following, which further details can be combined with the fixing device individually or in any combination.

In a preferred embodiment, the elongated member is an elongated pole.

In a preferred embodiment, said second mounting means are provided on the fixing base separately from the elongated member and from the first mounting means.

In a preferred embodiment, the elongated member, which is preferably an elongated pole, is immovably connected to the fixing base, preferably by welding or by bolt joint.

In a preferred embodiment, the second mounting means comprise threads, such as internal threads or external threads, in particular for enabling fixing of the support structure to the fixing base by bolt joint.

In a preferred embodiment, the second mounting means comprise a threaded member, such as a threaded rod having external threads, provided on the fixing base. In theory, however, the threaded member could alternatively be a nut member having internal threads or internal threads could be provided on a hole of the fixing base.

In a preferred embodiment, the second mounting means comprise a threaded member, which is a threaded rod protruding from the fixing base in longitudinal direction (L) of the pole.

In a preferred embodiment, the second mounting means comprise further a threaded counterpart for the threaded member such as preferably a nut member tightenable on the threaded rod.

In a preferred embodiment, the threaded rod is connected unrotatably, preferably immovably, to the fixing base. This can be implemented for instance by welding.

In a preferred embodiment, the fixing base is or at least comprises a plate, preferably a metal plate.

In a preferred embodiment, the elongated member is preferably more than 5 cm long, more preferably at least 10 cm long, most preferably at least 15 cm long.

In a preferred embodiment, the fixing base comprises one or more holes for receiving a fixing member, which one or more holes extend in direction L through the fixing base. The fixing base preferably comprises more than 5, most preferably at least 10 of said holes. Said fixing members are preferably screws.

In a preferred embodiment, the threaded member and the elongated member are parallel to each other.

In a preferred embodiment, the threaded member and the elongated member protrude from the fixing base side by side at a distance from each other.

In a preferred embodiment, the threaded member is shorter than the elongated member.

It is also brought forward a new fixing arrangement for fixing solar panels and a lifeline on top of a roof of a building, the fixing arrangement comprising one or more fixing devices, which are as defined anywhere above or in any of the claims of the application, fixed to the roof via its fixing base.

With this kind of solution one or more of the above-mentioned objects can be facilitated.

Preferable further details of the fixing arrangement are introduced in the following, which further details can be combined with the fixing arrangement and/or with the fixing device individually or in any combination.

In a preferred embodiment, a lifeline is mounted on the first mounting means of each said fixing device, and a support structure of solar panels is mounted on the second mounting means of each said fixing device.

In a preferred embodiment, a support structure of solar panels is mounted on the second mounting means of each said fixing device by bolt joint.

In a preferred embodiment, the fixing base of each said fixing device is fixed to the roof, in particular to the structure of the roof, with one or more fixing members such as preferably screws, or alternatively bolts or rivets, extending through one or more holes of the fixing base. The number of fixing members and the holes is preferably more than 5, most preferably at least 10. Said fixing members are preferably screws.

In a preferred embodiment, the second mounting means of the fixing device 1 are in a position which is in the longitudinal direction L closer to the fixing base than the position of the first mounting means. Thus, the second mounting means are closer to the roof structure 41 than the first mounting means.

In a preferred embodiment, the lifeline is or at least comprises a cable or a rail.

In a preferred embodiment, the support structure of solar panels is an elongated mounting rail.

In a preferred embodiment, one or more solar panels are mounted on the support structure 10 of solar panels.

In a preferred embodiment, the first mounting means for a lifeline comprise a connector member to which the lifeline can be connected. The connector member may be mounted on the elongated member or mountable on the elongated member e.g. by attaching it to the second end thereof for instance. The mounting can be implemented by a bolt joint for example. The connector member preferably comprises a hole to which a fastener or a clip of the lifeline can be connected, or through which the lifeline can be arranged to pass.

In a preferred embodiment, the elongated member, i.e. that is preferably a pole, and/or the threaded rod is/are arranged to extend through a waterproof cover layer of the roof in the longitudinal direction (L) of the elongated member/the pole.

In a preferred embodiment, the pole and/or the threaded rod protrude above the waterproof cover layer of the roof.

In a preferred embodiment, the fixing base is at least partially below or covered by a waterproof cover layer of the roof.

In a preferred embodiment, the waterproof cover layer is formed of one or more rollable sheets such as of one or more bituminous felt sheets, of one or more PVC sheets or of one or more roof plates for example.

In a preferred embodiment, the threaded rod of the second mounting means extends through an opening of the support structure. Preferably, a threaded counterpart member, such as a nut, has been fastened to an end of the threaded rod to tighten the support structure towards the fixing base.

In a preferred embodiment, the longitudinal direction of the pole is orthogonal to the plane of the plate and/or a planar bottom face of the plate, and/or to a planar face of the structure of the roof against which the bottom face the fixing base is placed or placeable.

In a preferred embodiment, the fixing base has a planar bottom face placed or for being placed against a planar face of a structure of the roof, the area of the planar bottom face being preferably at least 500 cm2, preferably more, such as more than 1000 cm2.

In a preferred embodiment, structure is a plate structure, such as a woodfiberboard or a plywood board or a wood board or a plate structure formed of coplanar wood boards [puulaudoista].

In a preferred embodiment, flexible elongated connection member such as a rope, a cable or a strap is connectable to the lifeline, which flexible elongated connection member is further connected or connectable to a safety harness.

In a preferred embodiment, the arrangement A comprises at least two of the fixing devices, i.e. satisfying what is defined above for the fixing device, the same lifeline being mounted on the first mounting means of the two fixing devices and tensioned to extend between them and/or the same support structure of solar panels is mounted on the second mounting means of the two fixing devices.

In a preferred embodiment, the roof comprises a waterproof cover layer.

In a preferred embodiment, the support structure of solar panels and the lifeline are mounted, or at least can be mounted, on the fixing device such that they are connected to the fixing base via different structures only, the support structure of solar panels in particular being connected to the fixing base via the second mounting means and the lifeline being connected to the fixing base via the elongated member. Hereby, the support structure of solar panels and the lifeline can be positioned apart and forces can be transmitted from them via different structures to the fixing base.

In a preferred embodiment, the support structure (10) of solar panels is connected to the fixing base (6), of said elongated member (7) and the second mounting means (9) only via the second mounting means (9); and the lifeline (3) is connected to the fixing base (6), of said elongated member (7) and the second mounting means (9) only via the elongated member (7). Hereby, the support structure of solar panels and the lifeline can be positioned apart and forces can be transmitted from them via different structures to the fixing base.

In a preferred embodiment, the elongated member and the threaded rod are arranged to extend through a waterproof cover layer (42) of the roof in the longitudinal direction of the elongated member through different piercings or openings of the waterproof cover. The piercings or openings can thus be made small in area.

It is also brought forward a new method for fixing devices, such as solar panels, and a lifeline on top of a roof of a building, the method comprising
fabricating an arrangement as described or defined anywhere above or in the claims of the application; and/or
using a fixing device as defined anywhere above or in the claims of the application fixing solar panels and a lifeline on top of a heat insulated roof of a building.

With this kind of solution one or more of the above-mentioned objects can be facilitated.

Preferable further details of the method have been introduced above, which further details can be combined with the method individually or in any combination.

Generally, the longitudinal direction of the elongated member / the pole is preferably orthogonal to the plane of the waterproof cover layer of the roof. Generally, the building is preferably a building the roof of which is horizontal or inclined. In the first case, the plane of the waterproof cover layer of the roof is horizontal whereby said longitudinal direction is vertical, and in the latter case the plane of the waterproof cover layer of the roof is inclined whereby said longitudinal direction is inclined at the same angle from vertical as the plane of the waterproof cover is from horizontal.

### Brief description of the drawings

In the following, the present invention will be described in more detail by way of example and with reference to the attached drawings, in which
Figure 1 illustrates schematically a fixing arrangement according to an embodiment.
Figure 2 illustrates partially sectional view A-A of Figure 1.
Figure 3 illustrates an enlarged detailed view of the fixing device of Figure 1 as well as the detail B of Figure 2 the waterproof cover layer of the roof not being shown.
Figure 4 illustrates the view of Figure 3 showing also the waterproof cover layer of the roof.
Figure 5 illustrates a perspective partial view of the arrangement (parts of the roof not shown).
Figure 6 illustrates an enlarged perspective partial view of the detail B of Figure 2 and an enlarged partial view of Figure 5.
Figures 7-9 illustrate preferred details of the fixing device of Figures 1-6.
Figures 10-12 illustrate preferred details of the first mounting means and their connection with a lifeline.

### Detailed description

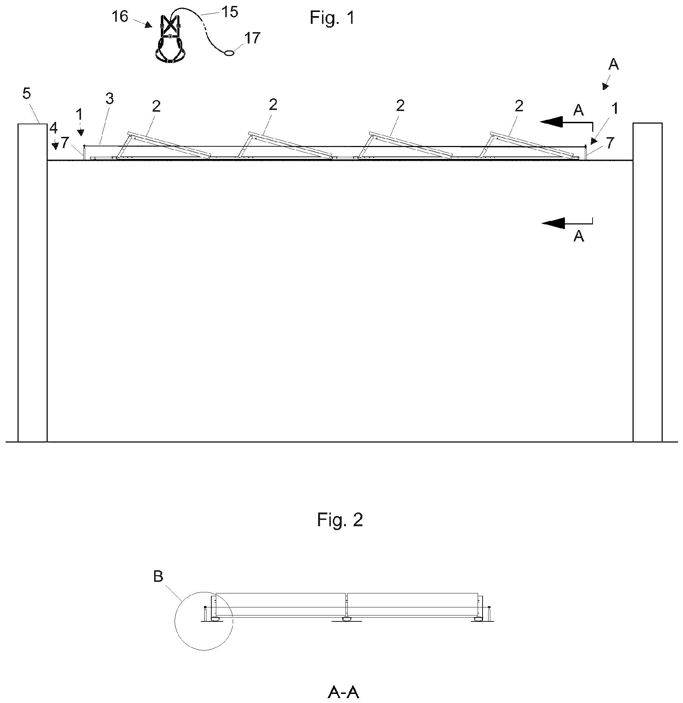

Figure 1 illustrates a fixing arrangement A according to an embodiment, for fixing solar panels 2 and a lifeline 3 on top of a roof 4 of a building 5. The roof 4 comprises a waterproof cover layer 42.

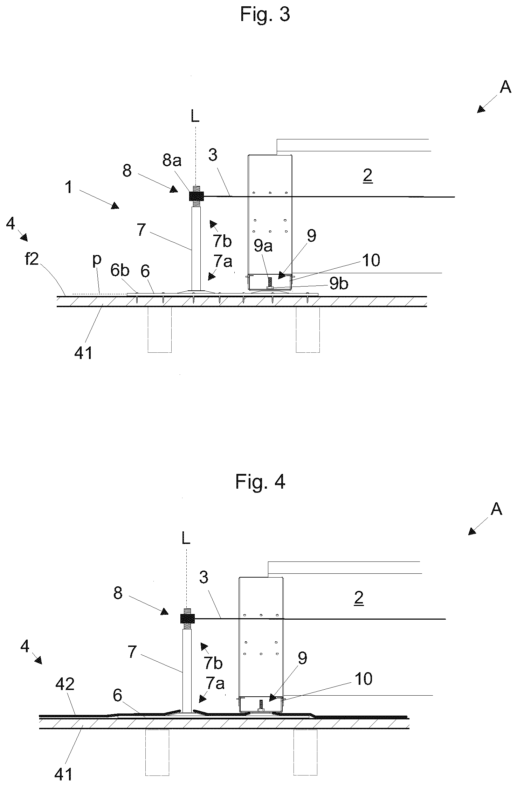

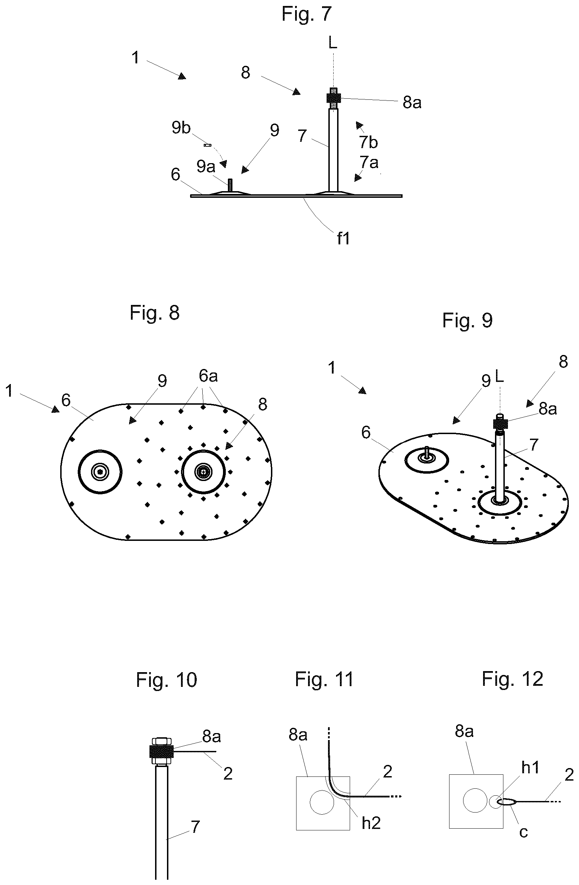

The fixing arrangement A comprises a fixing device 1 according to an embodiment, more particularly plurality of them. Details of the arrangement A and the structure of the fixing device 1 in use are visible in Figures 3-6. Details of the fixing device 1 are visible in Figures 7-9 shown separately from the roof 4 and the lifeline 3 and the solar panels 2.

The fixing device 1 for solar panels 2 and a lifeline 3 on top of a roof 4 of a building 5 comprises a fixing base 6 for being fixed to the roof 4; and an elongated member 7, which is an elongated pole 7, protruding from the fixing base 6. A first end 7a of the elongated pole 7 is connected to the fixing base 6. The fixing device 1 comprises a first mounting means 8 for a lifeline 3 at the second end 7b of the elongated pole 7. The fixing device 1 moreover comprises a second mounting means 9 for a support structure 10 of solar panels 1 said second mounting means 9 being provided on the fixing base 6.

Thus, a solution is achieved whereby with a single fixing device 1 and with a single connection to the roof 4 plurality of objects 2,3, namely the solar panels 2 and a lifeline 3, can be installed firmly on the rooftop. Hereby, also small amount of piercings or openings are required in a waterproof cover layer 42 of the roof 4, whereby watertightness of the roof 4 can be facilitated.

Said second mounting means 9 are provided on the fixing base 6 separately from the pole 7 and from the first mounting means 8. Thus, the support structure 10 of solar panels 1 and the lifeline 3 can be mounted on the fixing device 1 separately and/or such that they are connected to the fixing base 6 via different structures only. Hereby, they can be positioned apart and forces can be transmitted from them via different structures to the fixing base. This facilitates optimization of the shape, position and strength of these structures.

In the arrangement A, each said fixing device 1 is fixed to the roof 4 via its fixing base 6. A lifeline 3 is mounted on the first mounting means 8 of the fixing device 1, and a support structure 10 of solar panels 2 is mounted on the second mounting means 9 of each said fixing device 1.

In the preferred embodiment, the lifeline 3 is or at least comprises a cable as illustrated, but alternatively it could be a rail. A cable -lifeline is simple to manufacture as well as easy and safe in use. The cable is preferably a metal cable. The cable 3 is preferably tensioned between two of the fixing devices 1 as described referring to Figures 1-12. A flexible elongated connection member 15 such as a rope, a cable or a strap is connectable to the lifeline 3, which flexible elongated connection member 15 is further connected or connectable to a safety harness 16.

The lifeline 3 can be provided with a runner, which is able to run along the lifeline and is connectable to the flexible elongated connection member. Such a runner 17 can alternatively be provided on the flexible elongated connection member 15. The person coming to work on the rooftop can then connect the runner 17 to the lifeline 2. The runner 17 is in this case preferably an openable clip. As illustrated in Figure 1, the arrangement further comprises a harness means 15,16,17, comprising said member 15 and a safety harness 16 and preferably also the runner 17.

In the preferred embodiment, the support structure 10 of solar panels 2 is an elongated mounting rail. Solar panels 2 are mounted on the support structure 10.

The fixing base 6 of each said fixing device 1 is fixed immovably to the roof 4, in particular to a structure 41 of the roof 4, with fixing members 6b [shown in Figure 3 only] such as preferably screws, or alternatively bolts or rivets, extending through holes 6a of the fixing base 6.

In the preferred embodiment, the fixing base 6 is at least partially below or covered by a waterproof cover layer 42 of the roof 4. The waterproof cover layer 42 is preferably formed of one or more rollable sheets such as of one or more bituminous felt sheets, or of one or more PVC sheets, or possibly alternatively of one or more roof plates for example.

The fixing base 6 preferably has a planar bottom face f1 placed or for being placed against a planar face f2 of a structure 41 of the roof 4. This facilitates fixing of it immovably on the structure 41. The area of the planar bottom face f1 is preferably large, preferably at least 500 cm2, more, such as more preferably more than 1000 cm2. Large area facilitates fixing of the fixing base 6 immovably on the structure 41, even though no deep penetrating fixing members can be used. The preferably plurality of fixing members 6b are used for fixing. The large area also facilitates that a great number of fixing members 6b can be distributed over a vast area, whereby a firm fixing is achieved even though the individual fixing members 6b are not sturdy nor extend deep into the structure 41. Thus, the structure 41 need not be very thick nor very hard.

The fixing base 6 preferably comprises plurality of holes 6a for receiving a fixing member 6b, which holes extend in direction L through the fixing base 6. The fixing base 6 preferably comprises more than 5, most preferably at least 10 of said holes 6a. Said fixing members 6b are preferably screws.

The structure 41 is a preferably a plate structure, such as a fiber board or a plywood board or a wood board or a plate structure formed of coplanar wood boards [puulaudoista]. To such a structure a vast area fixing and/or a fixing with great number of fixing members 6b ensures firm fixing.

Preferably, the fixing base 6 is or at least comprises a plate, preferably a metal plate. Thus, the fixing base 6 can have low structure and it can be placed in a vertically tight space, such as below the waterproof cover layer 42 of the roof 4 without requiring substantial bulges in the waterproof cover layer 42. A fixing base 6 of this kind can also simply manufactured to have a planar bottom face f1 of vast area.

Preferably, the longitudinal direction L of the pole 8 is orthogonal to the plane p of the plate 6 and/or a planar bottom face f1 of the plate 6, and/or to a planar face f2 of the structure 41 of the roof 4 against which the bottom face f1 the fixing base 6 is placed or placeable. Thus, it can be simply made to protrude from the roof 4.

The elongated pole 7 is preferably at least 15 cm long, whereby the lifeline 3 can be positioned well apart from the surface of the roof 4. Thus, the lifeline 3 can have a clearance below it where parts connected to a safety harness 16 can run unobstructed. Also, thus the worker can quickly notice and find the lifeline 3, and connect his harness to it with a rope, cable or strap. Also, low structures can extend below the lifeline 3 across its path if this happens to be needed. For instance, it may occur that some parts of support structure 10 of solar panels 2 extend partially below the lifeline 3.

The second mounting means 9 of the fixing device 1 are in a position which is closer [preferably more than 5 cm closer] to the fixing base 6 than the position of the first mounting means 8. Thus, the second mounting means 9 are closer to the roof structure 41 than the first mounting means 8. Close proximity to the roof 4 is an advantageus position for the support structure 10 since hereby a stability of the structure is facilitated and the solar panels need not be unnecessarily high, which might cause issues e.g. with regard to wind.

The elongated member 7, i.e. here the pole 7, is immovably connected to the fixing base 6, preferably by welding or by bolt joint. In particular, said first end 7a thereof is immovably connected to the fixing base 6.

In the arrangement A, a support structure 10 of solar panels 2 is preferably mounted on the second mounting means 9 of each said fixing device 1 by bolt joint.

The second mounting means 9 preferably comprise threads, such as internal threads or external threads, in particular for enabling fixing of the support structure 10 to the fixing base 6 by bolt joint.

In the preferred embodiment, the second mounting means 9 comprise a threaded member 9a, which is a threaded rod having external threads, provided on the fixing base 6. The threaded rod 9a protrudes from the fixing base 6 in longitudinal direction L of the pole 7 [in the same direction as the pole 7; upwards in the Figures]. The second mounting means 9 comprise further a threaded counterpart for the threaded member 9a such as preferably a nut member 9b tightenable on the threaded rod 9a.

The threaded rod 9a protruding from the fixing base 6 is advantageous, because thus is provides a fixing member that can be easily noticed and connected to with the structure 10 and a counterpart member 9b for the threaded rod 9a. The fixing base 6 can thus be placed hidden, e.g. covered below a waterproof cover layer 42, and the fixing point is easy to find due to the protruding.

The threaded rod 9a is connected unrotatably, preferably immovably to the fixing base 6. This is preferably implemented by welding the threaded rod 9a tot the fixing base 6. This is a simple way to implement the structure. Alternatively, the threaded rod 9a could be a bolt placed or placeable through a hole of the fixing base, such that it has a head [a bolt head] takes support from the bottom side of the fixing base 6. Rotation thereof can be blocked by a stopping shape provided on the fixing base blocking the bolt head from rotating.

In the arrangement A, the threaded rod 9a extends through an opening of the support structure 10, and a threaded counterpart member 9b, such as a nut 9b, has been fastened to an end of the threaded rod 9a to tighten the support structure 10 towards the fixing base 6.

In the arrangement A, the pole 7 and/or the threaded rod 9a is/are arranged to extend through a waterproof cover layer 42 of the roof 4 in the longitudinal direction L. Each of them thus forms a connection to the fixing base 6, which is below the waterproof cover layer 42. This provides a compact and integral structure with small amount of piercings or openings in the waterproof cover layer 42. The piercings or openings can also be made small in area.

In the preferred embodiment, the first mounting means 8 for a lifeline 3 comprise a connector member 8a to which a lifeline 3 can be connected. In Figures, the connector member 8a has been illustrated schematically. The connector member 8a may be mounted or mountable on the elongated member 7, e.g. by attaching it to the second end 7b thereof for instance. Figure 10 illustrates one way to implement said attaching, which is in this case by a bolt joint. However, the connector member 8a could alternatively be an integral part of the elongated member/pole 7, such as a hole thereof to which to a lifeline 3 can be connected. The connector member 8a could be made in various alternative ways. Generally preferably, the connector member 8a preferably comprises a hole h1 to which a fastener or a clip c of the lifeline 3 can be connected [an example illustrated in Figure 12], or an opening h2 through which hole h2 the lifeline 3 can be arranged to pass [an example illustrated in Figure 11]. Figures 11 and 12 illustrate alternative structures for the connector member 8a of Figure 10 as seen from above as well as for the connection of the lifeline 3.

In the preferred embodiment of the method for fixing devices 2,3, such as solar panels 2, and a lifeline 3 on top of a roof 4 of a building 5, the method comprises
fabricating an arrangement A as described or defined anywhere above referring to Figures 1-9; and/or
using a fixing device 1 as described or defined anywhere above referring to Figures 1-9 for fixing solar panels 2 and a lifeline 3 on top of a roof 4 of a building 5.

Generally preferably, the solar panels are panels comprising photovoltaic cells, but they could alternatively be some other kind of solar panels.

Generally, the solar panels 1 are arranged to form an array of solar panels.

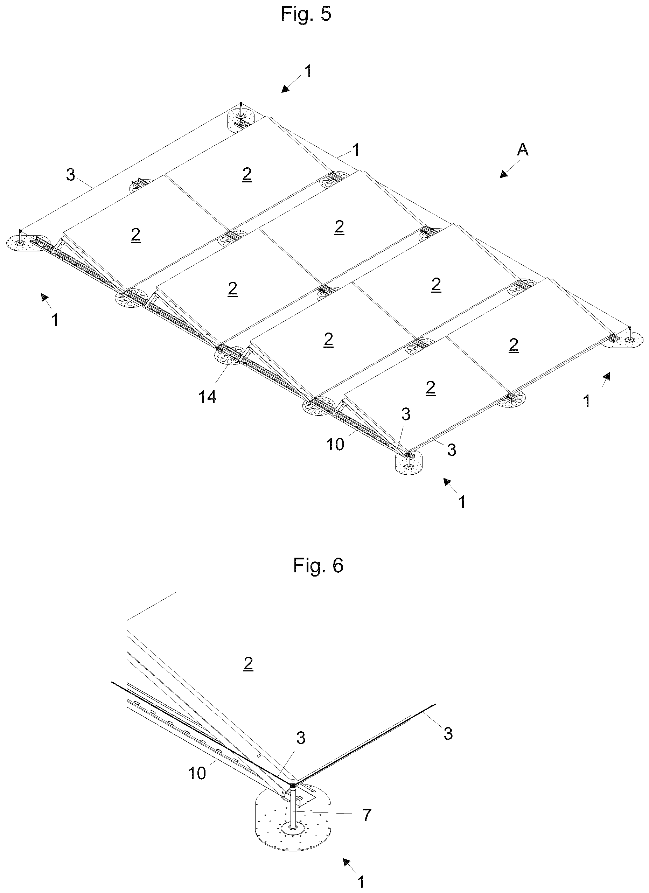

Generally, in addition to the fixing devices 1, the arrangement A may have also different kinds of fixing devices, such as the intermediate fixing devices 14 illustrated in Figure 5 utilized for fixing the intermediate parts of the support structure 10 to the roof 4. The intermediate fixing devices 14 can be support legs fixed to the roof 4, such as to the surface layers thereof. The additional fixing devices 14 are not necessary and if they are to be utilized for example due to the support structure 10 being very long, they can have various alternative structures. The structure of these intermediate fixing devices 14 is thus not more specifically disclosed.

Generally preferably, the fixing device 1 is made of metal.

Generally, in the application many structures have been described as preferred. This means that they are only preferably, but not necessarily, as defined. Accordingly, said structures could be of some other kind or possibly not present at all.

Generally preferably, as illustrated in Figure 1, the arrangement A comprises at least two of the fixing devices 1 fixed to the roof 4, i.e. satisfying what is defined above for the fixing device 1, the same lifeline 3 being mounted on the first mounting means 8 of the two fixing devices 1 and tensioned to extend between them and/or the same support structure 10 of solar panels 1 is mounted on the second mounting means 9 of the two fixing devices 1.

Generally, as mentioned above, the elongated member 7 is preferably an elongated pole. The elongated pole is preferably an elongated rod. The elongated rod may be a threaded rod, whereby a connector member 8a can be simply attached to it. The elongated rod is preferably shaped as an elongated metal cylinder, solid or hollow.

Generally, the elongated member is preferably more than 5 cm long, more preferably more than 10 cm long, most preferably at least 15 cm long. The member 7 being long facilitates that the connector member 8a can be provided on it at a high position. Should it be desired to make the elongated member 7 relatively short, the connector member 8a can be shaped such that it extends far from the fixing base 6 and such that the hole h1 or h2 thereof is more than 5 cm, more preferably more than 10 cm from the fixing base 6.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A fixing device (1) for fixing solar panels (2) and a lifeline (3) on top of a roof (4) of a building (5), wherein the fixing device (1) comprises
a fixing base (6) for being fixed to the roof (4); and
an elongated member (7), which is preferably an elongated pole (7), protruding from the fixing base (6), a first end (7a) thereof being connected to the fixing base (6); and
a first mounting means (8) for a lifeline (3) at the second end (7b) of the elongated member (7); and
a second mounting means (9) for a support structure (10) of solar panels (1), said second mounting means (9) being provided on the fixing base (6).

2. A fixing device (1) according to claim 1, wherein said second mounting means (9) are provided on the fixing base (6) separately from the elongated member (7) and from the first mounting means (8).

3. A fixing device (1) according to any of the preceding claims, wherein the elongated member (7) is immovably connected to the fixing base (6), preferably by welding or by bolt joint.

4. A fixing device (1) according to any of the preceding claims, wherein the second mounting means (9) comprise a threaded member (9a), which is a threaded rod (9a) protruding from the fixing base (6) in longitudinal direction (L) of the elongated member (7).

5. A fixing device (1) according to any of the preceding claims, wherein the threaded rod (9a) is connected unrotatably, preferably immovably, to the fixing base (6).

6. A fixing device (1) according to any of the preceding claims, wherein the fixing base (6) is or at least comprises a plate, preferably a metal plate.

7. A fixing device (1) according to any of the preceding claims, wherein the longitudinal direction (L) of the elongated member (7) is orthogonal to the plane (p) of the plate (6) and/or to a planar bottom face (f1) of the plate (6), and/or to a planar face (f2) of the structure (41) of the roof (4) against which the bottom face (f1) of the fixing base (6) is placed or placeable.

8. A fixing device (1) according to any of the preceding claims, wherein the fixing base (6) has a planar bottom face (f1) placed or for being placed against a planar face (f2) of a structure (41) of the roof (4), the area of the planar bottom face (f1) being preferably at least 500 cm2, preferably more, most preferably more than 1000 cm2.

9. A fixing arrangement (A) for fixing solar panels (2) and a lifeline (3) on top of a roof (4) of a building (5), the fixing arrangement (A) comprising one or more fixing devices (1) according to any of the preceding claims fixed to the roof (4) via its fixing base (6).

10. A fixing arrangement (A) according to any of the preceding claims, wherein a lifeline (3) is mounted on the first mounting means (8) of each said fixing device (1), and a support structure (10) of solar panels (2) is mounted on the second mounting means (9) of each said fixing device (1).

11. A fixing arrangement (A) according to any of the preceding claims, wherein the fixing base (6) of each said fixing device (1) is fixed to the roof (4), in particular to the structure (41) of the roof (4), with one or more fixing members (6a) such as preferably screws, or alternatively bolts or rivets, extending through one or more holes (6a) of the fixing base (6).

12. A fixing arrangement (A) or fixing device (1) according to any of the preceding claims, wherein the second mounting means (9) of the fixing device (1) are in a position which is closer to the fixing base (6) than the position of the first mounting means (8).

13. A fixing arrangement (A) or a fixing device (1) according to any of the preceding claims, wherein the lifeline (3) is or at least comprises a cable.

14. A fixing arrangement (A) according to any of the preceding claims, wherein
the elongated member (7) and/or the threaded rod (9a) is/are arranged to extend through a waterproof cover layer (42) of the roof (4) in the longitudinal direction (L) of the elongated member (7); and/or
the fixing base (6) is at least partially below and/or at least partially covered by a waterproof cover layer (42) of the roof (4).

15. A method for fixing devices (2,3), such as solar panels (2), and a lifeline (3) on top of a roof (4) of a building (5), the method comprising
fabricating an arrangement (A) as defined in any of the preceding claims; and/or
using a fixing device (1) as defined in any of the preceding claims for fixing solar panels (2) and a lifeline (3) on top of a roof (4) of a building (5).
